# EUROPEAN PATENT APPLICATION

(11) **EP 1 579 905 A2**
(43) Date of publication of application: **28.09.2005**
(21) Application number: 05006580.4
(22) Date of filing: 24.03.2005
(51) Int. Cl.: B01F 3/04, B01F 15/00, B67D 1/04

(54) **Carbonating apparatus for use in a refrigerator**

(30) Priority: 26.03.2004 KR 2004020705
(71) Applicant: Daewoo Electronics Corporation, Seoul (KR)
(72) Inventor: Shin, Sang In, Mapo-gu Seoul (KR)
(74) Representative: Jacoby, Georg

(57) **Abstract**

A carbonating apparatus includes a carbonator for producing a carbonated water, a drinking water discharge (59) connected to the carbonator for supplying water, a carbon dioxide supply tube (22) connected to the carbonator unit for supplying carbon dioxide, a liquid level sensor (31) for detecting a liquid level of the carbonated water contained in the carbonator, a concentration sensor (30) for detecting a carbon dioxide concentration of the carbonated water contained in the carbonator. A controller (33), in accordance with results detected by the liquid level sensor and the concentration sensor, controls the liquid level and the concentration of the carbonated water.

## Description

The present invention relates to a carbonating apparatus; and, more particularly, to a carbonating apparatus for use in a refrigerator capable of automatically controlling a liquid level and concentration of carbonated water.

Generally, a carbonating apparatus for use in a refrigerator produces carbonated water by dissolving carbon dioxide in water that has been purified by a filter and cooled by the chill of a refrigerator. Such produced carbonated water is supplied to a user through an exhaust nozzle of a dispenser installed at a refrigerator door.

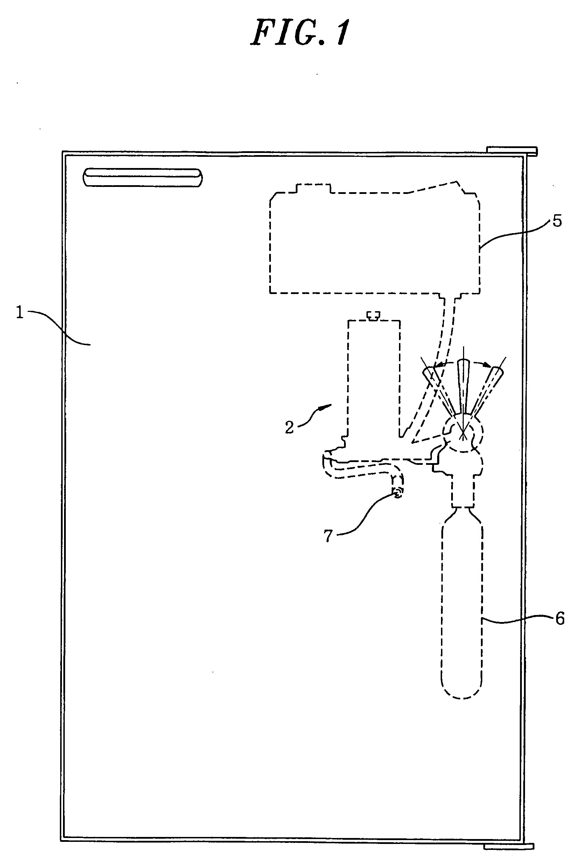

Referring to Fig. 1, there is illustrated a schematic front view of a refrigerator having a conventional carbonating apparatus, which is disclosed in the US Patent No. 4,514,994 entitled "APPARATUS FOR AERATING LIQUIDS". The conventional carbonating apparatus for use in a refrigerator, includes a carbonator 2 installed at an inner portion of a refrigerator door 1 and formed by a container for manufacturing carbonated water; a drinking water reservoir tank 5 installed at the inner portion of the refrigerator door 1, for supplying water to the carbonator 2; a gas cylinder 6 installed at the inner portion of the refrigerator door 1, for supplying carbon dioxide gas (or CO₂ gas) to the carbonator 2; and an operating lever 3 rotatably attached to an outer portion of the refrigerator door 1. If the user turns the lever 3 attached to the outer portion of the refrigerator door 1 to obtain the carbonated water, the CO₂ is exhausted from the gas cylinder 6 containing therein compressed or liquefied CO₂ gas and then melted in water supplied in the carbonator 2, thereby producing carbonated water. Next, the carbonated water produced in the carbonator 2 is supplied to a user through an exhaust nozzle 7.

However, the carbonating apparatus for use in a refrigerator, which is disclosed in the aforementioned US Patent, causes an increase of a manufacturing cost due to a complicated structure of a valve mechanism operated by the lever 3 and its large volume. Further, since it is manually operated, it is inconvenient to employ in a household refrigerator.

It is, therefore, an object of the present invention to provide a carbonating apparatus for use in a refrigerator capable of automatically controlling a liquid level and concentration of carbonated water.

In accordance with the present invention, there is provided a carbonating apparatus comprising a carbonator for producing a carbonated water; a drinking water discharge connected to the carbonator, for supplying water; a carbon dioxide supply tube connected to the carbonator unit, for supplying carbon dioxide; a carbonated water discharge tube connected to a lower portion of the carbonator, for exhausting the carbonated water produced in the carbonator; a liquid level sensor for detecting a liquid level of the carbonated water contained in the carbonator and then generating a signal indicating the detected liquid level; a concentration sensor for detecting a carbon dioxide concentration of the carbonated water contained in the carbonator and then generating a signal indicating the detected concentration; and a controller, in response to the signals from the liquid level sensor and the concentration sensor, for controlling the liquid level and the concentration of the carbonated water.

The above and other objects and features of the present invention will become apparent from the following description of preferred embodiments, given in conjunction with the accompanying drawings, in which:
Fig. 1 shows a schematic front view of a refrigerator having a conventional carbonating apparatus for use in a refrigerator;
Fig. 2 describes a schematic front view of a refrigerator having a carbonating apparatus therein in accordance with a preferred embodiment of the present invention;
Fig. 3 provides a cross-sectional view of the refrigerator having the carbonating apparatus shown in Fig. 2, which is taken along line III-III; and
Fig. 4 represents a diagram illustrating a control circuit and water supply tubes of the carbonating apparatus in accordance with the preferred embodiment of the present invention.

Hereinafter, a preferred embodiment of the present invention will be described in detail with reference to the accompanying drawings.

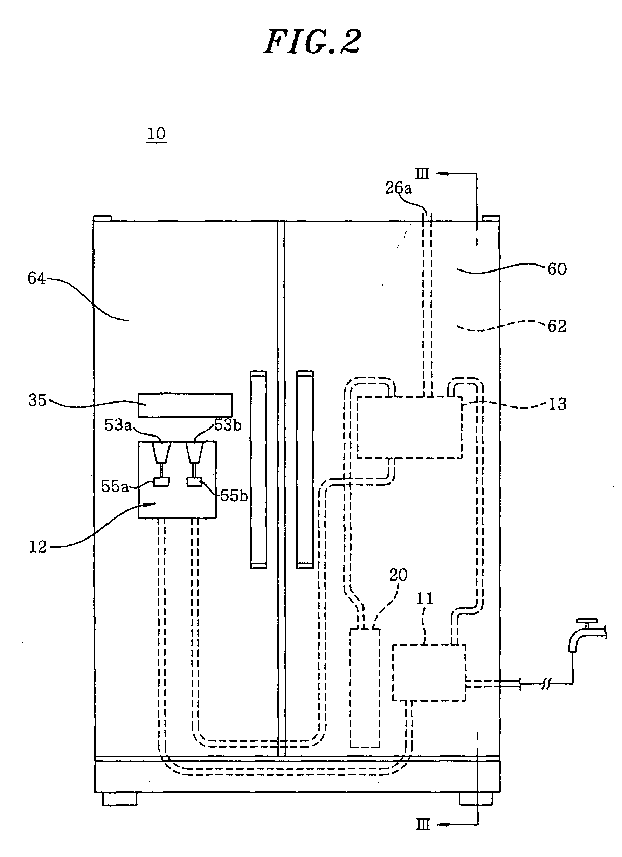

Referring to Fig. 2, there is illustrated a front view of a refrigerator having a carbonating apparatus therein in accordance with the present invention. As illustrated, a refrigerator 10, includes a refrigerator door 60 and a freezer door 64, each being hinged at a refrigerator body, a dispenser 12 provided at the freezer door 64, for supplying water or carbonated water to a user, and a carbonating apparatus shown in a dotted line. The carbonating apparatus for use in a refrigerator in accordance with the present invention includes a carbonator 13 installed in the inside of the refrigerator door 60, for producing carbonated water; a water supply tank 11 for supplying drinking water to the carbonator 13; a gas cylinder 20 for supplying carbon dioxide gas (or CO₂ gas) to the carbonator 13; a carbonated water dispensing nozzle 53a provided at the dispenser 12, for supplying the carbonated water produced in the carbonator 13; a display unit 35 for displaying to a user information on a liquid level and a CO₂ concentration of the carbonated water in the carbonator 13; and a controller (not shown in this drawing).

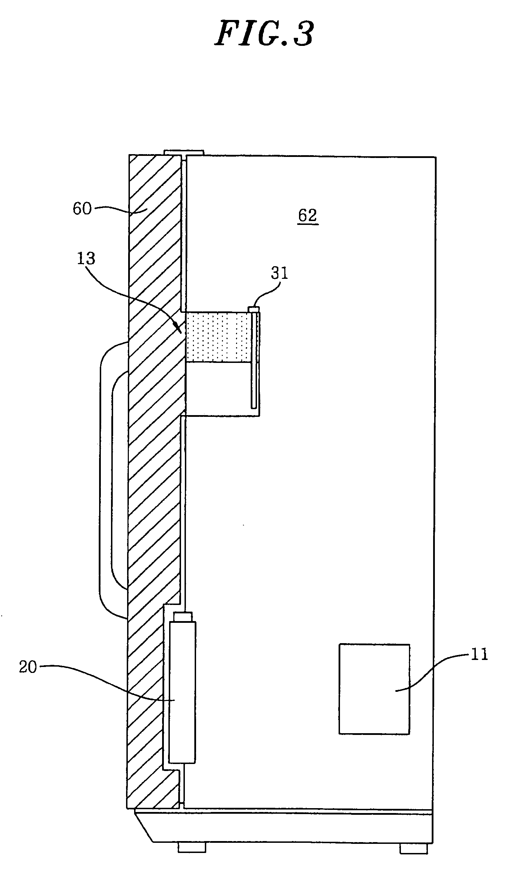

Referring to Fig. 3, there is illustrated a schematic cross-sectional view of the refrigerator 10 having th4e carbonating apparatus, which is taken along line III-III of Fig. 2. As shown in Fig. 3, the carbonator 13 is installed at the inner portion of the refrigerator door 60, and further, the carbonated water contained in the carbonator 13 is cooled to a predetermined temperature by the chill of the refrigeration compartment 62. Moreover, the water supply tank 11 is installed at a rear lower portion of the refrigeration compartment 62, and the water contained in the water supply tank 11 is cooled by the chill of the refrigeration compartment 62. The gas cylinder 20 is provided at a recess formed at the refrigerator door 60.

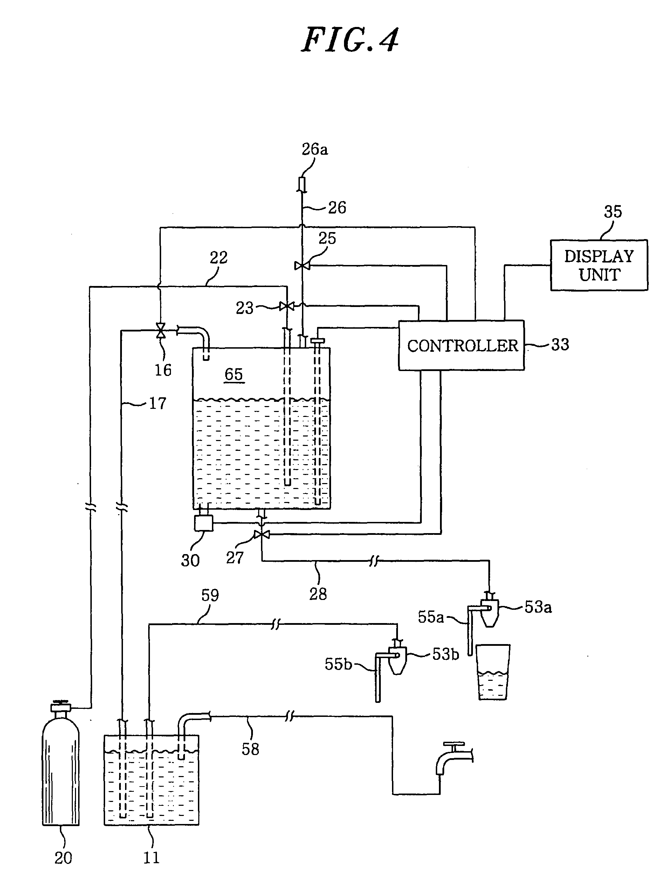

Referring to Fig. 4, there are schematically illustrated a control circuit and tubes of the carbonating apparatus for use in a refrigerator in accordance with the preferred embodiment of the present invention. The water supply tank 11 receives water from a water source, e.g., a water supply system for supplying tap water at a uniform water pressure, through a water supply tube 58. A filter for purifying water supplied from the water source may be provided in the middle of the water supply tube 58. The water supply tank 11 is connected to a cold water dispensing nozzle 53b attached to the dispenser 12 via a drinking water discharge 59. The water in the water supply tank 11 is supplied to the cold water dispensing nozzle 53b through the drinking water discharge 59 by a pump (not shown) installed in the middle of the drinking water discharge 59 or by a water pressure of the water source such as the water supply system, wherein the pump is controlled by a controller 33. In addition, the water supply tank 11 is connected to the carbonator 13 by a drinking water supply tube 17. The water in the water supply tank 11 is supplied to the carbonator 13 through the drinking water supply tube 17 by a pump (not shown) installed in the middle of the drinking water supply tube 17 or by a water pressure of the water source such as the water supply system, wherein the pump is controlled by the controller 33. A water valve 16 of which opening/closing is controlled by the controller 33 is installed in the middle of the drinking water supply tube 17, to thereby allow or block a water supply from the water supply tank 11 to the carbonator 13.

The gas cylinder 20 contains therein compressed or liquefied CO₂ gas. In this regard, CO₂ exhausted from the gas cylinder 20 has a predetermined pressure by a pressure controller (not shown) installed at an exhaust opening of the gas cylinder 20. The gas cylinder 20 is connected to the carbonator 13 by a carbon dioxide supply tube 22. Furthermore, a gas valve 23 of which opening/closing is controlled by the controller 33 is installed in the middle of the carbon dioxide supply tube 22, to thereby allow or block a CO₂ gas supply from the gas cylinder 20 to the carbonator 13.

The carbonator 13 is formed by a sealed container. Connected to an upper portion of the carbonator 13 are the drinking water supply tube 17 for supplying drinking water from the water supply tank 11 and the carbon dioxide supply tube 22 for supplying CO₂ gas from the gas cylinder 20. In addition, connected to an upper portion of the carbonator 13 is the exhaust tube 26 for exhausting CO₂ gas in an inner space 65 of the carbonator 13. Further, an exhaust valve 25 of which opening/closing is controlled by the controller 22 is installed in the middle of the exhaust tube 26, to thereby allow or block an exhaust of CO₂ gas from the carbonator 13 to an outside. An exhaust opening 26a of the exhaust tube 26 is formed at an upper portion or an upper side portion of the refrigerator 10.

Moreover, installed inside the carbonator 13 is a liquid level sensor 31 for detecting a liquid level of carbonated water contained in the carbonator 13 and then sending a signal indicating the detected liquid level to the controller 33.

Installed at a lower portion of the carbonator 13 is a concentration sensor 30 for detecting a CO₂ concentration of the carbonated water contained in the carbonator 13 and then sending a signal indicating the detected CO₂ concentration to the controller 33. Furthermore, connected to the lower portion of the carbonator 13 is a carbonated water discharge tube 28 for supplying the carbonated water contained in the carbonator 13 to a carbonated water dispensing nozzle 53a. A actuation lever 55a for opening/closing the carbonated water dispensing nozzle 53a is installed at the carbonated water dispensing nozzle 53a.

The controller 33 receives from the liquid level sensor 31 the signal indicating the liquid level of the carbonated water contained in the carbonator 13. If the carbonated liquid level in the carbonator 13 is lower than or equal to a predetermined level, the controller 33 sends a signal to display a 'waiting' indication on the display unit 35 and then controls the valve 16 provided in the middle of the drinking water supply tube 17 to be opened, thereby supplying complementarily water contained in the water supply tank 11 to the carbonator 13. And, at the same time, the controller 33 controls the valve 27 provided in the middle of the carbonated water discharge tube 28 connected to the lower portion of the carbonator 13 to be closed, thereby preventing the carbonated water from being supplied from the carbonator 13 to the carbonated water dispensing nozzle 53a.

Moreover, the controller 33 receives from the concentration detection device 30 a signal indicating the CO₂ concentration of the carbonated water contained in the carbonator 13. If the concentration of the carbonated water is lower than or equal to a predetermined concentration, the controller 33 controls the gas valve 23 provided in the middle of the carbon dioxide supply tube 22, thereby supplying complementarily CO₂ gas from the gas cylinder 20 to the carbonator 13. Further, the controller 33 sends a signal to display on the display unit 35 a 'waiting' or a 'low CO₂ concentration' indication. On the contrary, if the concentration of the carbonated water is higher than the predetermined concentration, the controller 33 controls the gas valve 23 provided in the middle of the carbon dioxide supply tube 22, thereby preventing CO₂ gas from being supplied from the gas cylinder 20 to the carbonator 13. Especially, if the CO₂ concentration of the carbonated water in the carbonator 13 is higher than or equal to the predetermined concentration, the gas valve 23 is closed and, simultaneously, the exhaust valve 25 provided in the middle of the exhaust tube 26 is opened, thereby exhausting an excess of CO₂ gas in the inner space 65 of the carbonator 13 to an outside. Accordingly, the CO₂ gas melted in the carbonated water is vaporized and, thus, the CO₂ gas concentration of the carbonated water decreases.

Hereinafter, an operation of the aforementioned carbonating apparatus for use in a refrigerator in accordance with the preferred embodiment of the present invention will be described.

First of all, the controller 33 receives from the liquid level sensor 31 the signal indicating the carbonated liquid level in the carbonator 13. If the carbonated liquid level is greater than a predetermined value, the controller controls the water valve 16 provided in the middle of the drinking water supply tube 17 to be closed and the carbonated water valve 27 of the carbonated water discharge tube 28 to be opened. On the other hand, if the carbonated liquid level is smaller than or equal to the predetermined value, the controller 33 controls the water valve 16 provided in the middle of the drinking water supply tube 17 to be opened, thereby supplying water from the water supply tank 11 to the carbonator 13. Further, the controller 33 sends the signal to display the 'waiting' indication on the display unit 35.

Next, the controller 33 receives from the concentration sensor 30 the signal indicating the CO₂ concentration of the carbonated water contained in the carbonator 13. If the CO₂ concentration of the carbonated water is smaller than or equal to the predetermined value, the controller 33 controls the gas valve 23 provided in the middle of the carbon dioxide supply tube 22, thereby supplying CO₂ gas from the gas cylinder 20 to the carbonator 13. The CO₂ gas supplied to the carbonator 13 is melted in the carbonated water contained in the carbonator 13 and, therefore, the CO₂ concentration increases. Moreover, the controller 33 sends the signal to display on the display unit 35 the 'waiting' or the 'low CO₂ concentration' indication. On the contrary, if the CO₂ concentration of the carbonated water is greater than the predetermined value, the controller 33 controls the gas valve 23 provided in the middle of the CO₂ supply tube 22 to be closed. Furthermore, if the CO₂ concentration of the carbonated water is greater than the predetermined value by a specific value, the valve 23 is closed and, at the same time, the valve 25 provided in the middle of the exhaust tube 26 is opened. Accordingly, an excess of CO₂ in the inner space 65 is exhausted to the outside for a predetermined time.

The carbonated water in the carbonator 13, which is produced to have a predetermined concentration, is supplied to the carbonated water dispensing nozzle 53a through the carbonated water discharge tube 28 and, then, if the user operates the actuation lever 55a of the carbonated water dispensing nozzle 53a, it is exhausted through the carbonated water dispensing nozzle 53a. Moreover, the water in the water supply tank 11 is supplied to the cold water dispensing nozzle 53b through the drinking water discharge 59 and, then, if the user operates an actuation lever 55b of the cold water dispensing nozzle 53b, it is exhausted through the cold water dispensing nozzle 53b.

Although the preferred embodiment of the present invention has been described by employing a double door refrigerator, it is also applicable to a refrigerator in which a freezer and a refrigeration compartment are vertically arranged.

As described above, in a carbonating apparatus for use in a refrigerator in accordance with the present invention, the operation of the carbonating apparatus is controlled by the controller using signals from the concentration detection device and the liquid level detection sensor, each being installed at the carbonator unit and, further, states of the carbonator unit are displayed on the display unit. Accordingly, a user can be provided with carbonated water without performing operations related to a production of carbonated water and check the states of the carbonator unit.

While the invention has been shown and described with respect to the preferred embodiments, it will be understood by those skilled in the art that various changes and modifications may be made without departing from the scope of the invention as defined in the following claims.

## Claims

1. A carbonating apparatus comprising:
a carbonator for producing a carbonated water;
a drinking water discharge connected to the carbonator, for supplying water;
a carbon dioxide supply tube connected to the carbonator unit, for supplying carbon dioxide;
a carbonated water discharge tube connected to a lower portion of the carbonator, for exhausting the carbonated water produced in the carbonator;
a liquid level sensor for detecting a liquid level of the carbonated water contained in the carbonator and then generating a signal indicating the detected liquid level;
a concentration sensor for detecting a carbon dioxide concentration of the carbonated water contained in the carbonator and then generating a signal indicating the detected concentration; and
a controller, in response to the signals from the liquid level sensor and the concentration sensor, for controlling the liquid level and the concentration of the carbonated water.

2. The apparatus of claim 1, further comprising:
means for allowing or blocking the water supply from the drinking water discharge to the carbonator under the control of the controller;
means for allowing or blocking the carbon dioxide supply from the carbon dioxide supply tube to the carbonator under the control of the controller; and
means for exhausting an excessive of carbon dioxide in the carbonator under the control of the controller if the detected concentration exceeds a predetermined value.

3. A refrigerator having a carbonating apparatus recited in any one of claims 1 to 2.
